# EUROPEAN PATENT SPECIFICATION

(11) **EP 4 394 229 B1**
(45) Date of publication and mention of the grant of the patent: **15.10.2025**
(21) Application number: 23218258.4
(22) Date of filing: 19.12.2023
(51) Int. Cl.: F16L 25/00

(54) **COUPLING, PARTICULARLY FOR CORRUGATED CONDUITS AND THE LIKE**
KUPPLUNG, INSBESONDERE FÜR GEWELLTE ROHRE UND DERGLEICHEN
RACCORD, EN PARTICULIER POUR TUYAUX ONDULÉS ET SIMILAIRES

(30) Priority: 29.12.2022 IT 202200027096
(43) Date of publication of application: 03.07.2024
(73) Proprietor: Euro 2000 S.p.A., 20083 Gaggiano, Frazione Vigano MI (IT)
(72) Inventor: SUNDARARAJ, Ramprasath, 20083 GAGGIANO MI (IT)
(74) Representative: Modiano, Micaela Nadia

(56) References cited:
- GB-A- 2 350 656
- US-A- 4 368 904
- US-A1- 2007 126 230

## Description

The present invention relates to a coupling, particularly for corrugated conduits and the like.

The aim of the present invention consists in providing a coupling, particularly for corrugated conduits and the like, that is capable of ensuring that the corrugated conduit is prevented from slipping out of said coupling as a result of the action of external disturbances such as, for example, mechanical traction, vibrations, water hammers and the like.

US 4 266 904, US 2007/126230 and GB 2 350 656 disclose couplings for corrugated tubes.

Within this aim, an object of the present invention consists in providing a coupling, particularly for corrugated conduits and the like, that is capable of preventing the infiltration of contaminants, such as water and dust, originating from the outside environment.

Another object of the present invention consists in providing a coupling, particularly for corrugated conduits and the like, that is capable of withstanding adverse environmental and weather conditions.

A further object of the present invention is to provide a coupling, particularly for corrugated conduits and the like, that can be easily assembled by an operator.

Another object of the present invention consists in providing a coupling, particularly for corrugated conduits and the like, that ensures the highest guarantees of reliability, operation and efficiency.

Last but not least, an object of the present invention is to provide a coupling, particularly for corrugated conduits and the like, with technologies that are per se known and which are such as to make it economically competitive.

This aim and these and other objects which will become better apparent hereinafter are achieved by a coupling, particularly for corrugated conduits and the like, as defined in claim 1.

Further characteristics and advantages of the invention will become more apparent from the detailed description of a preferred, but not exclusive, embodiment of a coupling, particularly for corrugated conduits and the like, illustrated by way of non-limiting example with the aid of the accompanying drawings wherein:

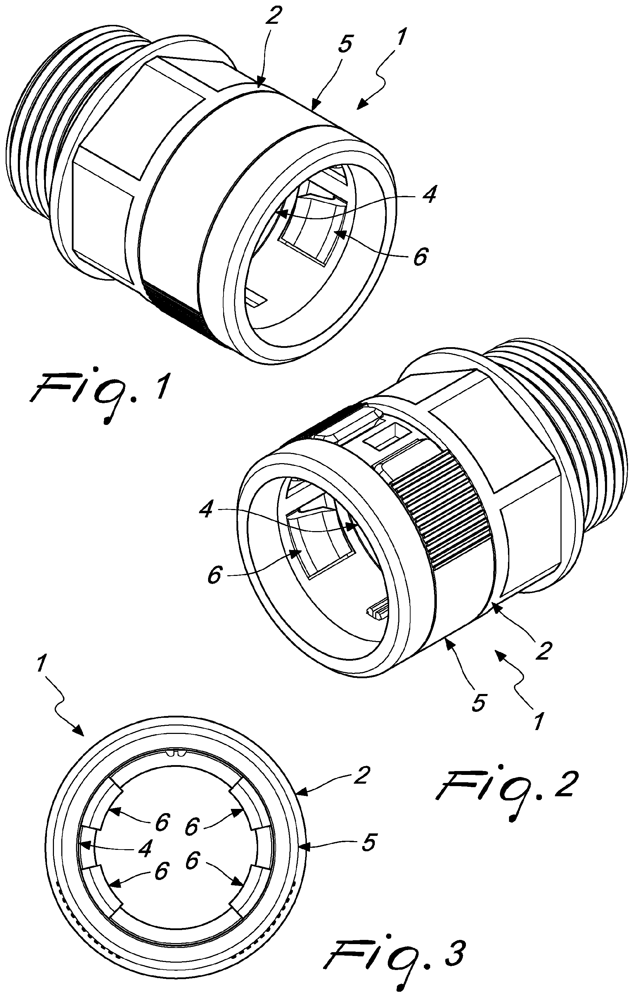

- Figure 1 is a first perspective view of the coupling according to the present invention;
- Figure 2 is a second perspective view from the front of the coupling shown in Figure 1;
- Figure 3 is a front elevation view of the coupling shown in the previous figures;

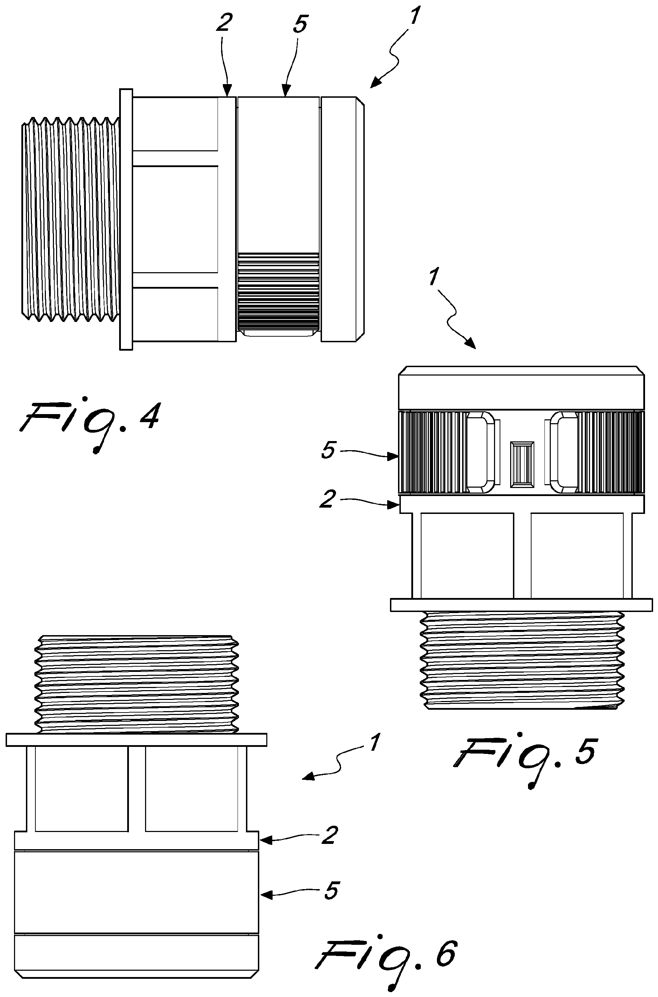

- Figures 4 to 6 are three side views, from three different viewpoints, of the coupling shown in the previous figures;
- Figure 7 is a perspective view of the main body of the coupling shown in the previous figures;
- Figure 8 is an enlarged-scale detail view of the main body shown in Figure 7;
- Figure 9 is a perspective view of the clip element of the coupling shown in Figures 1 to 6;
- Figure 10 is an enlarged-scale detail view of the clip element shown in Figure 9;
- Figure 11 is a front elevation view of the clip element shown in Figure 9;
- Figure 12 is a cross-sectional view of the clip element shown in Figure 11, taken along the line XII-XII;
- Figure 13 is a cross-sectional view of the clip element shown in Figure 11, taken along the line XIII-XIII;
- Figure 14 is an enlarged-scale detail view of the clip element shown in Figure 13;
- Figure 15 is an enlarged-scale detail view of the clip element shown in Figure 11;
- Figure 16 is an enlarged-scale detail view of the clip element shown in Figure 11;
- Figure 17 is a front elevation view of a variation of the clip element shown in the previous figures;
- Figure 18 is a cross-sectional view of the clip element shown in Figure 17, taken along the line XVIII-XVIII;
- Figure 19 is a cross-sectional view of the clip element shown in Figure 17, taken along the line XIX-XIX;
- Figure 20 is an enlarged-scale detail view of the clip element shown in Figure 19;
- Figures 21 and 22 are two front elevation views showing, in sequence, the assembly of the coupling according to the invention;
- Figure 23 is a cross-sectional view of the coupling shown in Figure 21, taken along the line XXIII-XXIII;
- Figure 24 is a cross-sectional view of the coupling shown in Figure 22, taken along the line XXIV-XXIV.

With reference to the figures, the coupling, particularly for corrugated conduits and the like, is generally designated by the reference numeral 1 and comprises:
- a main body 2 shaped to engage with an outer body, not shown for graphic simplicity, and to receive at least partially the end of a corrugated conduit or the like 3,
- a sealing element 4 accommodated inside the main body 2 in such a way as to envelop the corrugated conduit or the like 3 (by enshrouding it), creating a hermetic mating, and
- a clip element 5 associated with the main body 2 and shaped so as to grip the corrugated conduit or the like 3, preventing it from slipping out of the main body.

According to the invention, the clip element 5, advantageously elastic, has a substantially circular C-like shape adapted to externally envelop the main body 2 and comprises a series of extraction-preventing teeth 6 which protrude on its innermost side in the direction of the inner volume of the main body 2, and the latter has a hollow and substantially axially symmetric geometry with an outer groove 7 adapted to receive the clip element 5.

Conveniently a series of windows 8 is provided along the outer groove 7 that is adapted to allow the passage of the extraction-preventing teeth 6 in such a manner as to allow the retention of the corrugated conduit or the like 3.

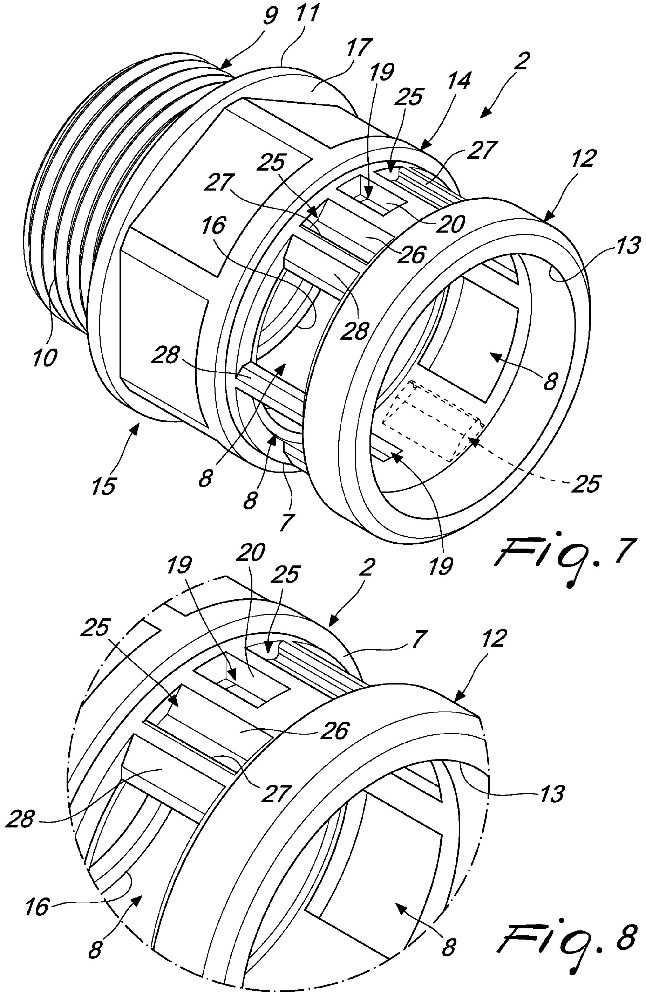

With reference to Figures 7 and 8, advantageously, the main body 2 comprises:
- a first end portion 9, which defines a threading 10, and an abutment surface 11 for its hermetic mating with the outer body;
- a second end portion 12, which is axially opposite to the first end portion 9 and defines the inlet 13 for the entry of the corrugated conduit or the like 3;
- and a central portion 14, which is provided with the outer groove 7, means for engagement 15 with external tools for fixing the coupling 1 to the outer body, and an inner groove 16 adapted to receive the sealing element 4.

In this embodiment, the threading 10 is of the male type (but it could be female, or there could be no threading) and the abutment surface 11 is defined by a flanged protrusion 17 which is defined between the first end portion 9 and the central portion 14, and which exits radially from the main body 2.

In a variation (not shown) of this embodiment, the threading 10 could be of the female type and the abutment surface 11 could be provided by an edge which is radially recessed at the end of the threading 10 of the female type.

The means for engagement 15 comprise a circumferential profile of the hexagonal type provided externally to the main body 2 proximate to the abutment surface 11 for the grip of the coupling 1 by ring spanners.

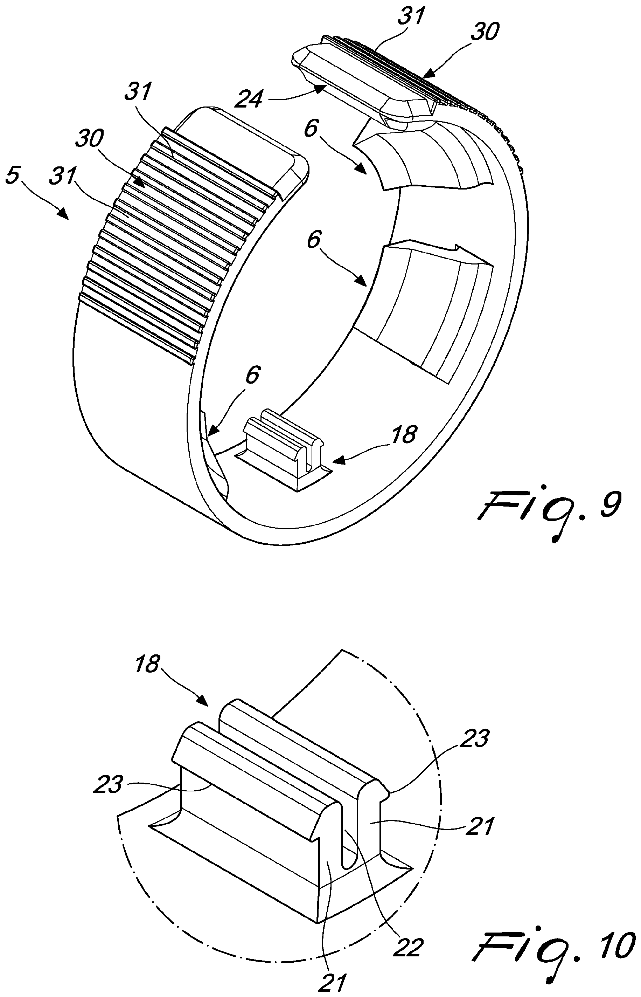

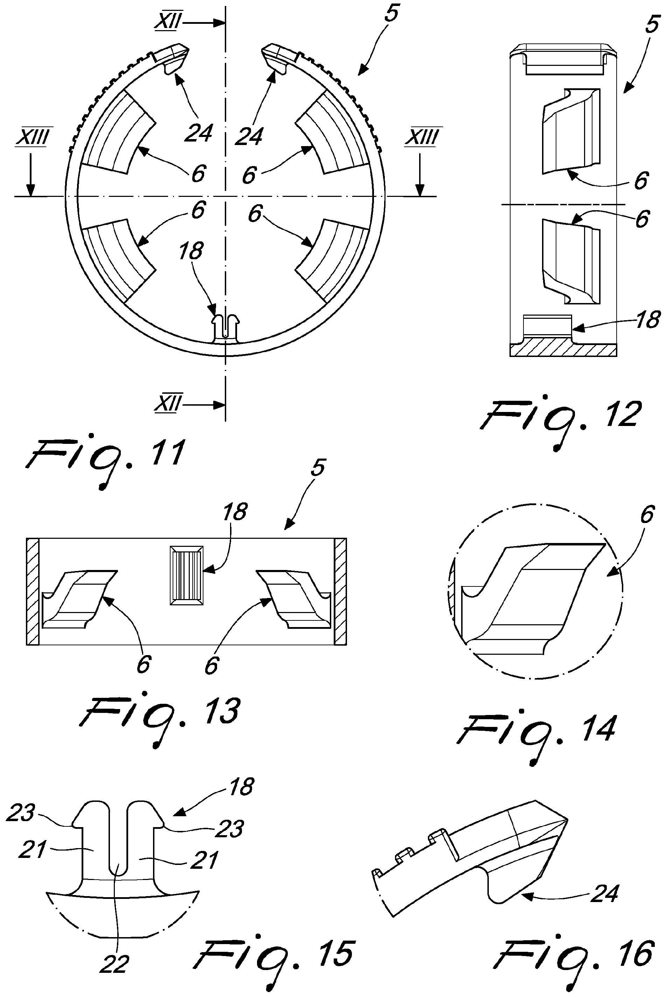

With reference to Figures 7 to 16, advantageously, at least one centering tooth 18 is defined on one of either the inner surface of the clip element 5 or the outer surface of the main body 2, and at least one respective centering seat 19 is defined on the other one of either the inner surface of the clip element 5 or the outer surface of the main body 2.

Conveniently, the centering seat 19 has an angular profile 20 that is slightly inclined on the side intended to receive the centering tooth 19 and the latter is of the snap-acting type in order to engage the centering seat 19 on the side opposite to the slightly inclined angular profile 20.

In the present embodiment, a single engagement tooth 18 is defined on the clip element 5 at a portion thereof which is circumferentially central and opposite to the opening of the circular C-shaped clip, and two engagement seats 25 are defined in the outer groove 7 of the main body 2 diametrically mutually opposite so as to allow, as will be better described below, two assembly configurations of the clip element 5 on the main body 2.

However, in a variation (not shown) of the present embodiment, both the position and the number of the engagement tooth 18 and the engagement seats 19 can be inverted while remaining within the inventive concept of the present invention.

Advantageously, the centering tooth 18 and the centering seats 19 are axially off-center with respect to the outer groove 7 and the elastic clip element 5 in such a manner as to define a predefined orientation of the clip element 5 during the step of assembly on the main body 2.

In the present embodiment, the centering tooth 18 comprises two centering tooth portions 21 mutually separated by a slot 22, each one having, on the opposite side with respect to the slot 22, a claw-like profile 23 so as to allow them to approach each other by elastic yielding during the step of assembly of the clip element 5 onto the main body 2 and so as to engage with the respective centering seat 19 once it has been passed through by the claw-like profiles 23.

Moreover, the clip element 5 comprises two retaining teeth 24 which are defined at its open ends and which each have a profile that is claw-shaped in the opposite direction to the opening of the circular C-shaped clip, for their engagement in respective retaining openings 25 which are defined on the main body 2 and are shaped so as to facilitate the retention of the retaining teeth 24 in the respective retaining openings 25.

In more detail, the retaining openings 25 each have a flared edge 26 and an undercut edge 27, which are mutually opposite, so as to guide the insertion and ensure the engagement of the retaining teeth 24 in the retaining openings 25.

Advantageously, two pairs of the retaining openings 25 are defined in the outer groove 7 of the main body 2 laterally to the two centering seats 19 and diametrically mutually opposite so as to allow the previously-mentioned two assembly configurations of the clip element 5 on the main body 2.

Furthermore, the clip element 5 comprises, at least proximate to the open ends of the substantially circular C-like shape, two corrugated surfaces 30, defined by a plurality of slots 31 which are mutually parallel and transverse with respect to the circumferential extension of the clip element 5, so that the elasticity of the clip element 5 facilitates the engagement of the retaining teeth 24 in the retaining openings 25.

In the present embodiment, the extraction-preventing teeth 6 extend radially inward with respect to the clip element 5 so as to be diametrically mutually opposite in pairs, so as to allow the two assembly configurations of the clip element 5 on the main body 2.

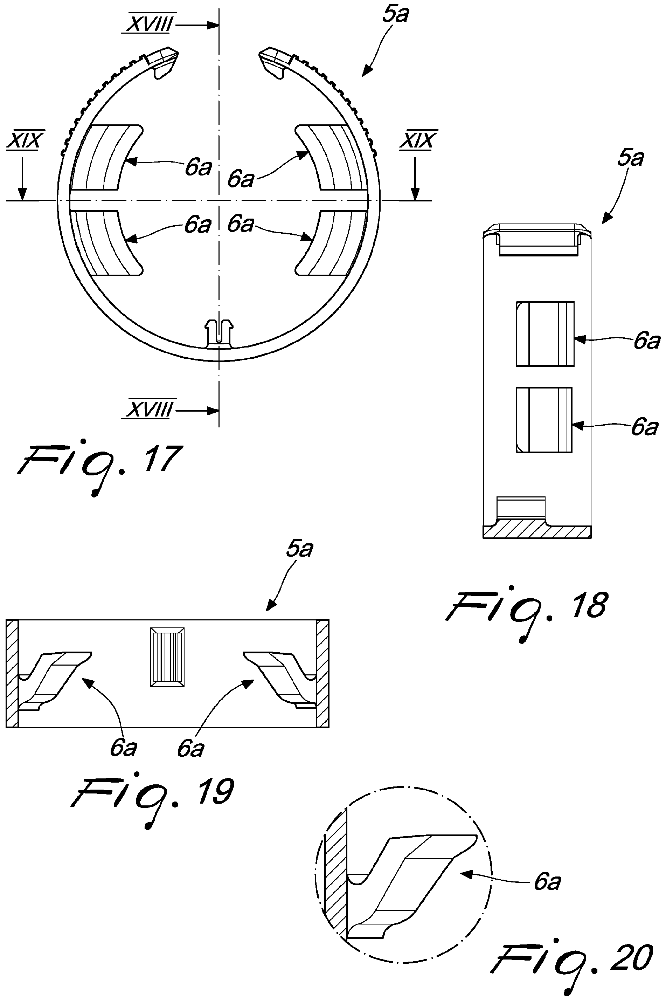

However, with reference to Figures 17 to 20, in a variation 5a of the clip element 5, the extraction-preventing teeth 6a extend inward with respect to the clip element 5a along a preferred diametric direction, so as to be mutually opposite in pairs along an axis of symmetry of the clip element 5a so as to allow the two assembly configurations of the clip element 5a on the main body 2.

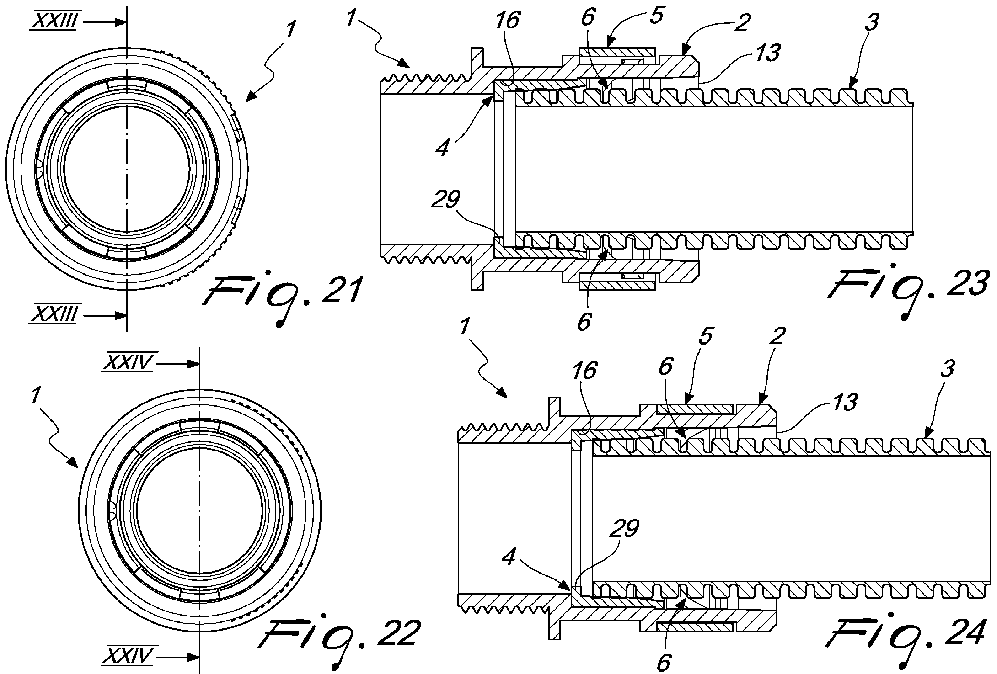

Both in the present embodiment and in the variation just described, there are four extraction-preventing teeth 6 and 6a and they have a claw-like shape which is flexed axially toward the first end portion 9 of the main body 2, which are elastic so that, in the step of assembling the corrugated conduit or the like 3, the extraction-preventing teeth 6 and 6a can interlock in the circumferential slots of the corrugated conduit or the like 3, so as to prevent its extraction from the coupling 1, as shown in Figure 24.

Furthermore, the windows 8 have a beveled profile 28 on the side intended to receive the extraction-preventing teeth 6 or 6a, so as to guide their passage through it.

The sealing element 4 has a substantially hollow cylindrical shape with a circular base and with a frustum-shaped internal profile, so as to act as a guide and interlock the corrugated conduit or the like 3 in it, ending at its smaller end face with an edge 29 which is radially recessed and acts as a stroke limit for the entry of the corrugated conduit or the like 3.

The operation and assembly of the coupling 1 according to the invention is easily intuited from the foregoing description.

Basically, once the sealing element 4 is inserted in the main body 2 and the latter is associated with the outer body at its end portion 9, the clip element 5 or 5a is applied, consolidating the whole.

In more detail, during the assembly of the clip element 5 or 5a, by virtue of the available two configurations at 180° from each other, the operator can selectively choose on which side to apply it as a function of the convenience of maneuverability, being guided by the centering tooth 18 and by the centering seat 19, the latter two components being axially off-center with respect to the outer groove 7 and the clip element 5.

In this way, the extraction-preventing teeth 6 or 6a pass through the main body 2 through the windows 8 so as to engage with the circumferential slots of the corrugated conduit or the like 3.

To complete the assembly, the operator presses on the end of the clip element 5 or 5a in such a way that the retaining teeth 24 can engage in the respective retaining openings 25.

In practice it has been found that the coupling according to the present invention achieves the intended aim and objects, in that it enables an easy and immediate assembly while at the same time ensuring a firm grip and seal on a corrugated conduit or the like on which it is applied.

The coupling, thus conceived, is susceptible of numerous modifications and variations, all of which are within the scope of the appended claims.

Moreover, all the details may be substituted by other, technically equivalent elements.

For example, the main body 2 and the clip elements 5 and 5a can be made of a plastic material such as PVC, nylon, special plastic etc. and the sealing element 4 can be made of an elastomer material such as types of silicone, EPDM, special elastomers, etc..

In practice the materials employed, provided they are compatible with the specific use, and the contingent dimensions and shapes, may be any according to requirements and to the state of the art.

This application claims priority from Italian patent Application No. 102022000027096.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A coupling (1), particularly for corrugated conduits and the like, which comprises:
- a main body (2) shaped to engage with an outer body and to receive at least partially the end of a corrugated conduit or the like (3),
- a sealing element (4) accommodated inside said main body (2) in such a way as to envelop said corrugated conduit or the like (3), creating a hermetic mating, and
- a clip element (5, 5a) associated with said main body (2) and shaped so as to grip said corrugated conduit or the like (3), preventing it from slipping out of said main body;
- said clip element (5, 5a) having a substantially circular C-like shape adapted to externally envelop said main body (2) and comprises a series of extraction-preventing teeth (6, 6a) which protrude on its innermost side in the direction of the inner volume of said main body (2);
- said main body (2) having a hollow and substantially axially symmetric geometry with an outer groove (7) adapted to receive said clip element (5, 5a), there being, along said outer groove (7), a series of windows (8) adapted to allow the passage of said extraction-preventing teeth (6, 6a) in such a manner as to allow the retention of said corrugated conduit or the like (3), **characterized in that** said clip element (5, 5a) comprises two retaining teeth (24) which are defined at its open ends and which each have a profile that is claw-shaped in the opposite direction to the opening of said circular C-shaped clip, for their engagement in respective retaining openings (25) which are defined on said main body (2) and are shaped so as to facilitate the retention of said retaining teeth (24) in said retaining openings (25).

2. The coupling (1) according to claim 1, **characterized in that** it comprises at least one centering tooth (18) defined on one of either the inner surface of said clip element (5, 5a) or the outer surface of said main body (2) and at least one respective centering seat (19) defined on the other one of either said inner surface of said clip element (5, 5a) or the outer surface of said main body (2), said at least one centering seat (19) having an angular profile (20) that is slightly inclined on the side intended to receive said at least one centering tooth (18) and said at least one centering tooth (18) being of the snap-acting type in order to engage said at least one centering seat (19) on the side opposite to said slightly inclined angular profile (20), said clip element (5, 5a) being elastic.

3. The coupling (1) according to claim 2, **characterized in that** said at least one centering tooth (18) and said at least one centering seat (19) are axially off-center with respect to said outer groove (7) and said elastic clip element (5, 5a) in such a manner as to define a predefined orientation of said elastic clip element (5, 5a) during the step of assembly on said main body (2).

4. The coupling (1) according to claim 2 or 3, **characterized in that** said at least one centering tooth (18) comprises two centering tooth portions (21) mutually separated by a slot (22) and each having, on the opposite side with respect to said slot (22), a claw-like profile (23) so as to allow them to approach each other by elastic yielding during the step of assembly of said elastic clip element (5, 5a) onto said main body (2) and so as to engage with said at least one centering seat (19) once it has been passed through by said claw-like profiles (23).

5. The coupling (1) according to claim 2, **characterized in that** said at least one centering tooth (18) is defined on said elastic clip element (5, 5a) at a portion thereof which is circumferentially central and opposite with respect to the opening of said circular C-shaped clip, and **in that** said at least one centering seat (19) comprises two engagement seats (19) defined in said outer groove (7) of said main body (2) diametrically mutually opposite so as to allow two assembly configurations of said elastic clip element (5, 5a) on said main body (2).

6. The coupling (1) according to claim 1, **characterized in that** said retaining openings (25) each have a flared edge (26) and an undercut edge (27), which are mutually opposite, so as to guide the insertion and ensure the engagement of said retaining teeth (24) in said retaining openings (25).

7. The coupling (1) according to claim 1, **characterized in that** it comprises two pairs of said retaining openings (25) defined in said outer groove (7) of said main body (2) laterally to said two centering seats (19) and diametrically mutually opposite so as to allow said two assembly configurations of said clip element (5, 5a) on said main body (2).

8. The coupling (1) according to one or more of the preceding claims, **characterized in that** said clip element (5, 5a) comprises, at least proximate to the open ends of said substantially circular C-like shape, two corrugated surfaces (30) which facilitate the engagement of said retaining teeth (24) in said retaining openings (25).

9. The coupling (1) according to claim 8, **characterized in that** said two corrugated surfaces (30) comprise a plurality of slots (31) which are parallel to each other and transverse with respect to the circumferential extension of said elastic clip element (5, 5a).

10. The coupling (1) according to one or more of the preceding claims, **characterized in that** said extraction-preventing teeth (6) extend radially inward with respect to said elastic clip element (5) so as to be diametrically mutually opposite in pairs, so as to allow said two assembly configurations of said elastic clip element (5) on said main body (2).

11. The coupling (1) according to one or more of the preceding claims, **characterized in that** said extraction-preventing teeth (6a) extend inward with respect to said elastic clip element (5a) along a preferred diametric direction, so as to be mutually opposite in pairs along an axis of symmetry of said elastic clip element (5a) so as to allow said two assembly configurations of said elastic clip element (5a) on said main body (2).

12. The coupling (1) according to one or more of the preceding claims, **characterized in that** said extraction-preventing teeth (6, 6a) have a claw-like shape which is flexed axially toward a first end portion (9) of said main body (2) and are elastic in such a way that said extraction-preventing teeth (6, 6a), in the step of assembling the corrugated conduit or the like, become interlocked in the circumferential slots of said corrugated conduit or the like (3) so as to prevent its extraction from said coupling (1).

13. The coupling (1) according to one or more of the preceding claims, **characterized in that** said windows (8) have a beveled profile (28) on the side intended to receive said extraction-preventing teeth (6, 6a).

14. The coupling (1) according to one or more of the preceding claims, **characterized in that** said sealing element (4) has a substantially hollow cylindrical shape with a circular base and with a frustum-shaped internal profile which ends, at its smaller end face, with an edge (29) which is radially recessed so as to act as a guide and interlock said corrugated conduit or the like (3) in it.

15. The coupling (1) according to claim 1, **characterized in that** said main body (2) comprises:
- said first end portion (9), which defines a threading (10), and an abutment surface (11) for its hermetic mating with said outer body;
- a second end portion (12), which is axially opposite to said first end portion (9) and defines the inlet (13) for the entry of said corrugated conduit or the like (3);
- and a central portion (14), which is provided with said outer groove (7), means for engagement (15) with external tools for fixing said coupling (1) to said outer body, and an inner groove (16) adapted to receive said sealing element (4).

16. The coupling (1) according to claim 16, **characterized in that** said threading (10) is of the male or female type and **in that** said abutment surface (11) is defined by a flanged protrusion (17) which is defined between said first end portion (9) and said central portion (14) and which exits radially from said main body (2).

17. The coupling (1) according to claim 15 or 16, **characterized in that** said means for engagement (15) comprise a circumferential profile of the hexagonal type provided externally to said main body (2) proximate to said abutment surface (11) for the grip of said coupling (1) by ring spanners.

## Patentansprüche

1. Eine Kupplung (1), insbesondere für gewellte Rohre und dergleichen, die Folgendes umfasst:
- einen Hauptkörper (2), geformt, um mit einem äußeren Körper in Eingriff zu stehen und zumindest teilweise das Ende eines gewellten Rohres oder dergleichen (3) aufzunehmen;
- ein Dichtungselement (4), derart in dem Hauptkörper (2) aufgenommen, dass es das gewellte Rohr oder dergleichen (3) umgibt und so eine hermetische Passung erzeugt, und
- ein Klammerelement (5, 5a), verbunden mit dem Hauptkörper (2) und geformt, um das gewellte Rohr oder dergleichen (3) zu klemmen und so daran zu hindern, aus dem Hauptkörper herauszurutschen;
- wobei das Klammerelement (5, 5a) eine im Wesentlichen kreisähnliche C-Form hat, die ausgebildet ist, um den Hauptkörper (2) außen zu umgeben, und eine Reihe extraktionsverhindernder Zähne (6, 6a) umfasst, die an seiner innersten Seite in Richtung des Innenvolumens des Hauptkörpers (2) vorstehen;
- wobei der Hauptkörper (2) eine hohle und im Wesentlichen axialsymmetrische Geometrie mit einer äußeren Nut (7) hat, die ausgebildet ist, um das Klammerelement (5, 5a) aufzunehmen; wobei sich entlang der äußeren Nut (7) eine Reihe von Fenstern (8) befindet, die ausgebildet sind, um das Hindurchdringen der extraktionsverhindernden Zähne (6, 6a) derart zu gestatten, dass das Festhalten des gewellten Rohrs oder dergleichen (3) ermöglicht wird; **dadurch gekennzeichnet, dass** das Klammerelement (5, 5a) zwei Haltezähne (24) umfasst, die an seinen offenen Enden bestimmt sind und jeweils ein Profil haben, das in der der Öffnung der kreisähnlichen C-förmigen Klammer entgegengesetzten Richtung klauenförmig ist, zum Zwecke seines Eingriffs in entsprechende Halteöffnungen (25), die in dem Hauptkörper (2) bestimmt und geformt sind, um das Halten der Haltezähne (24) in den Halteöffnungen (25) zu erleichtern.

2. Die Kupplung (1) gemäß Anspruch 1, **dadurch gekennzeichnet, dass** sie mindestens einen Zentrierzahn (18) umfasst, der entweder an der Innenfläche des Klammerelements (5, 5a) oder an der Außenfläche des Hauptkörpers (2) bestimmt ist, und mindestens einen entsprechenden Zentriersitz (19), der an der jeweils anderen der Innenfläche des Klammerelements (5, 5a) oder der Außenfläche des Hauptkörpers (2) bestimmt ist; wobei der mindestens eine Zentriersitz (19) ein Winkelprofil (20) hat, das auf der Seite, die zur Aufnahme des mindestens einen Zentrierzahns (18) dient, leicht geneigt ist; und wobei der mindestens eine Zentrierzahn (18) vom Schnappwirkungs-Typ ist, um in den mindestens einen Zentriersitz (19) auf der Seite einzugreifen, welche dem leicht geneigten Winkelprofil (20) gegenüberliegt; wobei das Klammerelement (5, 5a) elastisch ist.

3. Die Kupplung (1) gemäß Anspruch 2, **dadurch gekennzeichnet, dass** der mindestens eine Zentrierzahn (18) und der mindestens eine Zentriersitz (19) mit Bezug auf die äußere Nut (7) und das elastische Klammerelement (5, 5a) derart axial versetzt sind, dass eine vordefinierte Ausrichtung des elastischen Klammerelements (5, 5a) während des Montageschritts an dem Hauptkörper (2) bestimmt wird.

4. Die Kupplung (1) gemäß Anspruch 2 oder 3, **dadurch gekennzeichnet, dass** der mindestens eine Zentrierzahn (18) zwei Zentrierzahnabschnitte (21) umfasst, die voneinander durch einen Schlitz (22) getrennt sind und jeweils auf der dem Schlitz (22) gegenüberliegenden Seite ein klauenartiges Profil (23) haben, um es ihnen zu ermöglichen, sich durch elastisches Nachgeben während des Schritts der Montage des elastischen Klammerelements (5, 5a) auf dem Hauptkörper (2) einander anzunähern und mit dem mindestens einen Zentriersitz (19) in Eingriff zu stehen, sobald er von den klauenartigen Profilen (23) passiert wurde.

5. Die Kupplung (1) gemäß Anspruch 2, **dadurch gekennzeichnet, dass** der mindestens eine Zentrierzahn (18) an dem elastischen Klammerelement (5, 5a) in einem Abschnitt desselben bestimmt ist, welcher in der Mitte des Umfangs und der Öffnung der kreisähnlichen C-förmigen Klammer gegenüberliegt; und dadurch, dass der mindestens eine Zentriersitz (19) zwei Eingriffssitze (19) umfasst, die in der äußeren Nut (7) des Hauptkörpers (2) einander diametral gegenüber bestimmt sind, um zwei Montagekonfigurationen des elastischen Klammerelements (5, 5a) an dem Hauptkörper (2) zu ermöglichen.

6. Die Kupplung (1) gemäß Anspruch 1, **dadurch gekennzeichnet, dass** die Halteöffnungen (25) jeweils eine aufweitete Kante (26) und eine Unterschneidungskante (27) haben, die einander gegenüberliegen, um das Einführen der Haltezähne (24) in die Halteöffnungen (25) zu leiten und den Eingriff derselben darin sicherzustellen.

7. Die Kupplung (1) gemäß Anspruch 1, **dadurch gekennzeichnet, dass** sie zwei Paar von Halteöffnungen (25) umfasst, die in der äußeren Nut (7) des Hauptkörpers (2) seitlich von den zwei Zentriersitzen (19) und einander diametral gegenüber bestimmt sind, um die zwei Montagekonfigurationen an dem Klammerelement (5, 5a) an dem Hauptkörper (2) zu ermöglichen.

8. Die Kupplung (1) gemäß einem oder mehreren der obigen Ansprüche, **dadurch gekennzeichnet, dass** das Klammerelement (5, 5a) zumindest in der Nähe der offenen Enden der im Wesentlichen kreisähnlichen C-Form zwei gewellte Oberflächen (30) umfasst, welche das Eingreifen der Haltezähne (24) in die Halteöffnungen (25) erleichtern.

9. Die Kupplung (1) gemäß Anspruch 8, **dadurch gekennzeichnet, dass** die zwei gewellten Oberflächen (30) eine Vielzahl von Schlitzen (31) umfassen, die parallel zueinander und quer zur Umfangserstreckung des elastischen Klammerelements (5, 5a) sind.

10. Die Kupplung (1) gemäß einem oder mehreren der obigen Ansprüche, **dadurch gekennzeichnet, dass** die extraktionsverhindernden Zähne (6) sich mit Bezug auf das elastische Klammerelement (5) radial nach innen erstrecken, um einander paarweise diametral gegenüberzuliegen und so die zwei Montagekonfigurationen des elastischen Klammerelements (5) an dem Hauptkörper (2) zu ermöglichen.

11. Die Kupplung (1) gemäß einem oder mehreren der obigen Ansprüche, **dadurch gekennzeichnet, dass** sich die extraktionsverhindernden Zähne (6a) mit Bezug auf das elastische Klammerelement (5a) in einer bevorzugten diametralen Richtung nach innen erstrecken, um einander entlang einer Symmetrieachse des elastischen Klammerelements (5a) in Paaren gegenüberzuliegen und so die zwei Montagekonfigurationen des elastischen Klammerelements (5a) an dem Hauptkörper (2) zu ermöglichen.

12. Die Kupplung (1) gemäß einem oder mehreren der obigen Ansprüche, **dadurch gekennzeichnet, dass** die extraktionsverhindernden Zähne (6, 6a) eine klauenartige Form haben, welche axial zu einem ersten Endabschnitt (9) des Hauptkörpers (2) hin gebogen ist, und derart elastisch sind, dass die extraktionsverhindernden Zähne (6, 6a) in dem Schritt des Montierens des gewellten Rohres oder dergleichen in den Umfangsschlitzen des gewellten Rohres oder dergleichen (3) blockiert werden, um seine Extraktion aus der Kupplung (1) zu verhindern.

13. Die Kupplung (1) gemäß einem oder mehreren der obigen Ansprüche, **dadurch gekennzeichnet, dass** die Fenster (8) auf der Seite, die zur Aufnahme der extraktionsverhindernden Zähne (6, 6a) bestimmt ist, ein abgeschrägtes Profil (28) haben.

14. Die Kupplung (1) gemäß einem oder mehreren der obigen Ansprüche, **dadurch gekennzeichnet, dass** das Dichtungselement (4) eine im Wesentlichen hohle zylindrische Form mit einer kreisförmigen Basis und mit einem stumpfförmigen Innenprofil hat und an seiner kleineren Stirnfläche in einer Kante (29) endet, die radial zurückgesetzt ist, um als Führung zu dienen und das gewellte Rohr oder dergleichen (3) in ihm zu blockieren.

15. Die Kupplung (1) gemäß Anspruch 1, **dadurch gekennzeichnet, dass** der Hauptkörper (2) Folgendes umfasst:
- den ersten Endabschnitt (9), der ein Gewinde (10) bestimmt, und eine Widerlagerfläche (11) zum Zwecke seiner hermetischen Passung mit dem äußeren Körper;
- einen zweiten Endabschnitt (12), der dem ersten Endabschnitt (9) axial gegenüberliegt und den Einlass (13) für den Eintritt des gewellten Rohrs oder dergleichen (3) bestimmt;
- und einen zentralen Abschnitt (14), der mit der äußeren Nut (7), Mitteln für den Eingriff (15) mit externen Werkzeugen zur Befestigung der Kupplung (1) an dem äußeren Körper und einer inneren Nut (16) versehen ist, die ausgebildet ist, um das Dichtungselement (4) aufzunehmen.

16. Die Kupplung (1) gemäß Anspruch 16, **dadurch gekennzeichnet, dass** das Gewinde (10) vom Innen- oder Außengewindetyp ist, und dadurch, dass die Widerlagerfläche (11) von einem mit einem Flansch versehenen Vorsprung (17) bestimmt ist, welcher zwischen dem ersten Endabschnitt (9) und dem zentralen Abschnitt (14) bestimmt ist und radial aus dem Hauptkörper (2) austritt.

17. Die Kupplung (1) gemäß Anspruch 15 oder 16, **dadurch gekennzeichnet, dass** die Mittel (15) für den Eingriff ein Umfangsprofil vom sechseckigen Typ umfassen, bereitgestellt außerhalb des Hauptkörpers (2) in der Nähe der Widerlagerfläche (11) zum Greifen der Kupplung (1) mit Ringschlüsseln.

## Revendications

1. Raccord (1), en particulier pour tuyaux ondulés et similaires, qui comprend :
- un corps principal (2) formé de manière à s'engager avec un corps extérieur et à recevoir au moins partiellement l'extrémité d'un tuyau ondulé ou similaire (3),
- un élément d'étanchéité (4) logé à l'intérieur dudit corps principal (2) de manière à envelopper ledit tuyau ondulé ou similaire (3), créant un accouplement hermétique, et
- un élément de serrage (5, 5a) associé audit corps principal (2) et formé de manière à saisir ledit tuyau ondulé ou similaire (3), l'empêchant de glisser hors dudit corps principal ;
- ledit élément de serrage (5, 5a) ayant une forme sensiblement circulaire en C adaptée pour envelopper extérieurement ledit corps principal (2) et comprenant une série de dents anti-extraction (6, 6a) qui font saillie sur son côté le plus intérieur dans la direction du volume intérieur dudit corps principal (2) ;
- ledit corps principal (2) ayant une géométrie creuse et sensiblement symétrique axialement avec une rainure extérieure (7) adaptée pour recevoir ledit élément de serrage (5, 5a), une série de fenêtres (8) étant prévues le long de ladite rainure extérieure (7) et adaptées pour permettre le passage desdites dents anti-extraction (6, 6a) de manière à permettre la retenue dudit tuyau ondulé ou similaire (3), **caractérisé en ce que** ledit élément de serrage (5, 5a) comprend deux dents de retenue (24) qui sont définies à ses extrémités ouvertes et qui ont chacune un profil en forme de griffe dans la direction opposée à l'ouverture dudit clip circulaire en forme de C, pour leur engagement dans des ouvertures de retenue respectives (25) qui sont définies sur ledit corps principal (2) et sont formées de manière à faciliter la retenue desdites dents de retenue (24) dans lesdites ouvertures de retenue (25).

2. Le raccord (1) selon la revendication 1, **caractérisé en ce qu'**il comprend au moins une dent de centrage (18) définie sur l'une des surfaces intérieure dudit élément de serrage (5, 5a) ou extérieure dudit corps principal (2) et au moins un siège de centrage (19) respectif défini sur l'autre desdites surfaces intérieure dudit élément de serrage (5, 5a) ou la surface extérieure dudit corps principal (2), ledit au moins un siège de centrage (19) ayant un profil angulaire (20) qui est légèrement incliné sur le côté destiné à recevoir ladite au moins une dent de centrage (18) et ladite au moins une dent de centrage (18) étant du type à encliquetage afin de s'engager dans ledit au moins un siège de centrage (19) du côté opposé audit profil angulaire légèrement incliné (20), ledit élément de serrage (5, 5a) étant élastique.

3. Le raccord (1) selon la revendication 2, **caractérisé en ce que** ladite au moins une dent de centrage (18) et ledit au moins un siège de centrage (19) sont décentrés axialement par rapport à ladite rainure extérieure (7) et audit élément de serrage élastique (5, 5a) de manière à définir une orientation prédéfinie dudit élément de serrage élastique (5, 5a) pendant l'étape d'assemblage sur ledit corps principal (2).

4. Le raccord (1) selon la revendication 2 ou 3, **caractérisé en ce que** ladite au moins une dent de centrage (18) comprend deux parties de dent de centrage (21) séparées mutuellement par une fente (22) et ayant chacune, sur le côté opposé par rapport à ladite fente (22), un profil en forme de griffe (23) de manière à leur permettre de s'approcher l'une de l'autre par élasticité pendant l'étape d'assemblage dudit élément de serrage élastique (5, 5a) sur ledit corps principal (2) et de s'engager avec ledit au moins un siège de centrage (19) une fois qu'il a été traversé par lesdits profils en forme de griffe (23).

5. Le raccord (1) selon la revendication 2, **caractérisé en ce que** ladite au moins une dent de centrage (18) est définie sur ledit élément de serrage élastique (5, 5a) au niveau d'une partie de celui-ci qui est centrale sur le pourtour et opposée à l'ouverture dudit clip circulaire en forme de C, et **en ce que** ledit au moins un siège de centrage (19) comprend deux sièges d'engagement (19) définis dans ladite rainure extérieure (7) dudit corps principal (2) diamétralement opposés l'un à l'autre de manière à permettre deux configurations d'assemblage dudit élément de serrage élastique (5, 5a) sur ledit corps principal (2).

6. Le raccord (1) selon la revendication 1, **caractérisé en ce que** lesdites ouvertures de retenue (25) ont chacune un bord évasé (26) et un bord en contre-dépouille (27), qui sont mutuellement opposés, de manière à guider l'insertion et à assurer l'engagement desdites dents de retenue (24) dans lesdites ouvertures de retenue (25).

7. Le raccord (1) selon la revendication 1, **caractérisé en ce qu'**il comprend deux paires desdites ouvertures de retenue (25) définies dans ladite rainure extérieure (7) dudit corps principal (2) latéralement par rapport auxdits deux sièges de centrage (19) et diamétralement opposées entre elles de manière à permettre lesdites deux configurations d'assemblage dudit élément de serrage (5, 5a) sur ledit corps principal (2).

8. Le raccord (1) selon l'une ou plusieurs des revendications précédentes, **caractérisé en ce que** ledit élément de serrage (5, 5a) comprend, au moins à proximité des extrémités ouvertes de ladite forme sensiblement circulaire en C, deux surfaces ondulées (30) qui facilitent l'engagement desdites dents de retenue (24) dans lesdites ouvertures de retenue (25).

9. Le raccord (1) selon la revendication 8, **caractérisé en ce que** lesdites deux surfaces ondulées (30) comprennent une pluralité de fentes (31) qui sont parallèles entre elles et transversales par rapport à l'extension circonférentielle dudit élément de serrage élastique (5, 5a).

10. Le raccord (1) selon l'une ou plusieurs des revendications précédentes, **caractérisé en ce que** lesdites dents anti-extraction (6) s'étendent radialement vers l'intérieur par rapport audit élément de serrage élastique (5) de manière à être diamétralement opposées par paires, afin de permettre lesdites deux configurations d'assemblage dudit élément de serrage élastique (5) sur ledit corps principal (2).

11. Le raccord (1) selon l'une ou plusieurs des revendications précédentes, **caractérisé en ce que** lesdites dents anti-extraction (6a) s'étendent vers l'intérieur par rapport audit élément de serrage élastique (5a) le long d'une direction diamétrale préférée, de manière à être mutuellement opposées par paires le long d'un axe de symétrie dudit élément de serrage élastique (5a) afin de permettre lesdites deux configurations d'assemblage dudit élément de serrage élastique (5a) sur ledit corps principal (2).

12. Le raccord (1) selon l'une ou plusieurs des revendications précédentes, **caractérisé en ce que** lesdites dents anti-extraction (6, 6a) ont une forme en griffe qui est fléchie axialement vers une première partie d'extrémité (9) dudit corps principal (2) et sont élastiques de telle manière que lesdites dents anti-extraction (6, 6a), lors de l'étape d'assemblage du tuyau ondulé ou similaire, s'emboîtent dans les fentes circonférentielles dudit tuyau ondulé ou similaire (3) de manière à empêcher son extraction dudit raccord (1).

13. Le raccord (1) selon l'une ou plusieurs des revendications précédentes, **caractérisé en ce que** lesdites fenêtres (8) ont un profil biseauté (28) sur le côté destiné à recevoir lesdites dents anti-extraction (6, 6a).

14. Le raccord (1) selon l'une ou plusieurs des revendications précédentes, **caractérisé en ce que** ledit élément d'étanchéité (4) présente une forme cylindrique sensiblement creuse avec une base circulaire et un profil interne tronconique qui se termine, à sa face d'extrémité la plus petite, par un bord (29) qui est radialement en retrait de manière à servir de guide et à verrouiller ledit tuyau ondulé ou similaire (3) à l'intérieur.

15. Le raccord (1) selon la revendication 1, **caractérisé en ce que** ledit corps principal (2) comprend :
- ladite première partie d'extrémité (9), qui définit un filetage (10) et une surface d'appui (11) pour son accouplement hermétique avec ledit corps extérieur ;
- une deuxième partie d'extrémité (12), qui est axialement opposée à ladite première partie d'extrémité (9) et définit l'entrée (13) pour l'entrée dudit tuyau ondulé ou similaire (3) ;
- et une partie centrale (14), qui est pourvue de ladite rainure extérieure (7), de moyens d'engagement (15) avec des outils extérieurs pour fixer ledit raccord (1) audit corps extérieur, et d'une rainure intérieure (16) adaptée pour recevoir ledit élément d'étanchéité (4).

16. Le raccord (1) selon la revendication 16, **caractérisé en ce que** ledit filetage (10) est de type mâle ou femelle et **en ce que** ladite surface d'appui (11) est définie par une saillie à bride (17) qui est définie entre ladite première partie d'extrémité(9) et ladite partie centrale (14) et qui sort radialement dudit corps principal (2).

17. Le raccord (1) selon la revendication 15 ou 16, **caractérisé en ce que** lesdits moyens d'engagement (15) comprennent un profil circonférentiel de type hexagonal prévu à l'extérieur dudit corps principal (2) à proximité de ladite surface d'appui (11) pour la préhension dudit raccord (1) par des clés à anneau.
